# EUROPÄISCHE PATENTSCHRIFT

(11) **EP 2 602 591 B1**
(45) Veröffentlichungstag und Bekanntmachung des Hinweises auf die Patenterteilung: **20.04.2016**
(21) Anmeldenummer: 11192147.4
(22) Anmeldetag: 06.12.2011
(51) Int. Cl.: G01C 21/32, G01C 21/36

(54) **Verfahren zur vereinfachten Speicherung von Daten repräsentierend Formen**
Method for simplified storage of data representing shapes
Procédé de stockage simplifié de données représentant des formes

(43) Veröffentlichungstag der Anmeldung: 12.06.2013
(73) Patentinhaber: Telenav GmbH, 10623 Berlin (DE)
(72) Erfinder: Kandal, Philipp, 88069 Tettnang (DE); Kartschi, Stefan, 407280 Floresti Cluj (RO)
(74) Vertreter: Raffay & Fleck

(56) Entgegenhaltungen:
- JP-A- 2000 029 383
- JINGSONG MA ET AL: "A real-time parallel implementation of Douglas-Peucker polyline simplification algorithm on shared memory multi-core processor computers", COMPUTER APPLICATION AND SYSTEM MODELING (ICCASM), 2010 INTERNATIONAL CONFERENCE ON, IEEE, PISCATAWAY, NJ, USA, 22. Oktober 2010 (2010-10-22), Seiten V4-647, XP031789264, ISBN: 978-1-4244-7235-2

## Beschreibung

Die vorliegende Erfindung betrifft ein Verfahren zum Strukturieren und Speichern von Daten, die die Form eines Objekts wiedergeben bzw. einen entsprechenden Datensatz bzw. ein Verfahren zur Anzeige, eine entsprechende Karte sowie ein entsprechendes Navigationsgerät bzw. eine entsprechende Navigationssoftware.

Aus dem Stand der Technik sind zahlreiche Verfahren zur Speicherung entsprechender Daten bzw. Anzeige solcher Daten oder Navigationsgeräte bekannt. Dabei tritt jedoch beim Zoomen in den entsprechenden Daten bzw. Karten das Problem auf, dass beim Ändern des Anzeigemaßstabes, also beispielsweise beim Herein- und Herauszoomen, beim Überschreiten bestimmter Änderungsgrenzen Kartenmaterial nachgeladen werden muss, was dazu führt, dass der Benutzer zeitweise keine Karte angezeigt erhält.

Üblicherweise werden 4 bis 16 Stufen von Änderungsgrenzen vorgehalten, die je nach Anzeigemaßstab verwendet und entsprechend geladen werden müssen.

Beim Überschreiten des Anzeigemaßstabes von der einen zur anderen Stufe werden dann die Daten der nun anzuwendenden Stufe geladen und entsprechend angezeigt. Innerhalb dieser Stufe ist eine gewisse Veränderung des Maßstabes möglich. Wird die Veränderung des Maßstabes zu groß, so dass eine weitere Stufe anzuwenden ist, werden erneut die Daten der dann anzuwendenden Stufe nachgeladen und angezeigt.

Auch ist es aus der JP 2000029383 bekannt, Kartendaten hierarchisch zu Speichern und als Platzhalter für Stützpunkte, die in niedrigeren Ebenen abgelegt sind, Dummyknoten in der höheren Ebene vorzusehen. Dazu werden die Dummyknoten anstelle von Koordinaten mit Referenzen zu Knoten der darunter liegenden Ebene gespeichert.

Die Aufgabe der vorliegenden Erfindung ist es somit ein entsprechendes Verfahren bzw. eine entsprechende Datenstruktur anzugeben, die ein solches Nachladen, das zur zeitweisen Unterbrechung der Anzeige führt, und Nachteile der JP 2000029383 vermeidet. Der Erfinder hat zunächst festgestellt, dass es möglich ist, die in höchster Auflösung vorliegenden Daten bei entsprechendem Herauszoomen mit Hilfe des Ramer-Douglas-Peucker-Algorithmus so zu verringern, dass eine entsprechende Anzeige auch möglich ist, wenn die gespeicherte Anzahl der Punkte höher wird, als in der aktuellen Auflösung anzeigbare Punkte verfügbar sind. Sind jedoch
n Punkte gespeichert, so ist die Komplexität des Ramer-Douglas-Peucker-Algorithmus n x log(n). Beim Einsatz eines solchen Verfahrens auf mobilen Endgeräten führt dies zu einer Überschreitung der Rechenkapazität der üblichen Endgeräte, so dass eine solche Vereinfachung nicht ohne Wartezeit möglich ist.

Darauf basierend hat der Erfinder eine Lösung gefunden, die eine entsprechende Anzeige unterbrechungsfrei über den gesamten Zoombereich ermöglicht. Dazu werden die entsprechenden Daten in hierarchischen Strukturen abgelegt, die so organisiert sind, dass je nach gewähltem Maßstab bzw. gewählter Auflösung die jeweils relevanten Punkte zur Anzeige verwendet werden können, ohne dass aufwendige Rechenarbeit notwendig ist. Wird der Maßstab verändert, kann vergleichsweise einfach die Auswahl der zur Anzeige verwendeten Daten verändert werden, ohne dass aufwendige Umrechenarbeiten notwendig wären.

Gelöst wird die Aufgabe somit durch ein Verfahren zur Speicherung gemäß Anspruch 1 sowie einen Datensatz gemäß Anspruch 4 und ein Verfahren zur Anzeige gemäß Anspruch 5 sowie eine digitale Karte gemäß Anspruch 8, ein Navigationsgerät gemäß Anspruch 9, eine Navigationssoftware gemäß Anspruch 10, einen Datenträger gemäß Anspruch 11 sowie ein mobiles Endgerät gemäß Anspruch 12.

Die abhängigen Unteransprüche 2 bis 3 und 6 und 7 geben vorteilhafte Weiterbildungen des Verfahrens an. Diese sind entsprechend auf den Datensatz gemäß Anspruch 4 übertragbar.

Das erfindungsgemäße Verfahren zum Strukturieren und/oder Speichern von Daten repräsentierend die Form mindestens eines Objektes, das durch eine Menge von Stützpunkten dargestellt werden kann, ist dadurch gekennzeichnet, dass die ein Objekt repräsentierenden Daten in einer Hierarchie aufweisend mindestens zwei Ebenen strukturiert und/oder gespeichert werden. Dabei wird jeder Ebene eine Teilmenge der das Objekt repräsentierenden Daten zugeordnet beziehungsweise in jeder Ebene eine Teilmenge der Daten gespeichert. Die Zuordnung zu den Ebenen erfolgt dabei derart, dass aus der Menge der Stützpunkte, durch die das Objekt dargestellt werden kann oder für dieses Verfahren dargestellt wird, mindestens zwei Ankerpunkte bestimmt werden, deren Daten in der hierarchisch obersten Ebene zugeordnet und/oder gespeichert werden. Von den übrigen Stützpunkten oder Teilmengen der übrigen Stützpunkte, deren Stützpunkte zwischen auf dem Objekt benachbarten schon zugeordneten Stützpunkte liegen, wird jeweils nacheinander der Stützpunkt ausgewählt, der den größten Abstand von einer Linie durch die schon zu Ebenen zugeordneten, insbesondere jeweils benachbarten, Stützpunkte und Ankerpunkte aufweist, wobei die Zuordnung zu den Ebenen in absteigender Hierarchie der Ebenen erfolgt.

Objekte, die sich durch Stützpunkte darstellen lassen, sind in der Regel alle zu speichernden Objekte. Je nach Anzahl der Stützpunkte können die Objekte unterschiedlich komplex sein bzw. mit unterschiedlicher Genauigkeit gespeichert werden. Als Stützpunkte werden dabei üblicherweise Ecken des Objekts gewählt. Runde Objekte, wie beispielsweise Kreise oder Kugeln, lassen sich durch eine entsprechende Menge von Stützpunkten beliebig genau approximieren. Zum Speichern der entsprechenden Daten ist somit zunächst das Objekt durch entsprechende Stützpunkte zu repräsentieren. Dabei können entsprechende Vereinfachungen, Glättungen oder ähnliches am Objekt vorgenommen werden. Entsprechende Algorithmen sind aus dem Stand der Technik zahlreich bekannt. Ist das Objekt durch eine Menge von Stützpunkten repräsentiert, können zunächst mindestens zwei Ankerpunkte ausgewählt werden. Derartige Ankerpunkte sind bei einer Linie vorteilhafterweise beispielsweise Anfangs- und Endpunkt. Bei geschlossenen Objekten werden ggf. entsprechend mehr Ankerpunkte gewählt. Der Zweck der Ankerpunkte ist zunächst eine Darstellung zu ermöglichen, die eine grobe Vereinfachung des Objekts darstellt. Ein Kreis könnte somit beispielsweise durch vier auf dem Kreis liegende Ankerpunkte repräsentiert werden. Diese könnten vorteilhafterweise über den Kreis gleich verteilt sein. Darüber hinaus können wahlweise auch weitere Daten, beispielsweise über die geometrischen Eigenschaften des Objektes, wie beispielsweise die Eigenschaft, dass es sich um eine geschlossene Kurve oder ein dreidimensionales Objekt bzw. ein zweidimensionales Objekt oder beispielsweise ein offenes Objekt, wie beispielsweise eine Linie, handelt, gespeichert werden.

Ausgehend von den gewählten Ankerpunkten werden sodann die verbleibenden Stützpunkte, die nicht als Ankerpunkte ausgewählt wurden, den Ebenen zugeordnet. Dies erfolgt dadurch, dass der Stützpunkt bestimmt wird, der den größten Abstand von einer gedachten Linie durch die Ankerpunkte und alle schon zugeordneten Stützpunkte aufweist. Dieser Stützpunkt wird sodann einer Ebene zugeordnet und/oder in einer Ebene gespeichert. Dabei erfolgt Zuordnung zu Ebenen und/oder die Speicherung in den Ebenen in absteigender Hierarchie der Ebenen. Dass bedeutet, dass zunächst in der hierarchisch höchsten Ebene und sodann in den darunter liegenden Ebenen zugeordnet und/oder gespeichert wird.

Der Wechsel der Ebene kann durch verschiedene Kriterien bestimmt werden. So kann beispielsweise die Anzahl der in einer Ebene vorgehaltenen/gespeicherten Stützpunkte beschränkt sein. Alternativ kann auch ein Wechsel der Ebene beispielsweise dann erfolgen, wenn der berechnete Abstand zur Linie ein bestimmtes Maß unterschreitet. Auch können in der obersten Ebene nur Ankerpunkte oder Ankerpunkte und ein oder mehrere Stützpunkte gespeichert werden.

Weitere Kriterien oder Kombinationen sind denkbar.

Nach der Zuordnung können durchaus keine Unterschiede zwischen Ankerpunkten und sonstigen Stützpunkten erkennbar bleiben. Ankerpunkte zeichnen sich allein dadurch aus, dass sie als Ausgangspunkt für die erste Hilfslinie zur weiteren Sortierung der Stützpunkte dienen. Sie können sich jedoch auch durch weitere Eigenschaften auszeichnen, beispielsweise dadurch, dass sie Anfangs- und Endpunkte darstellen.

Durch ein solches Verfahren lassen sich alle Arten von Objekten in entsprechenden hierarchischen Strukturen speichern. So können beispielsweise Straßen, Pfade, Höhenlinien, Gebietsgrenzen, Routen oder Flächen entsprechend gespeichert werden. Insbesondere werden kartografische Objekte gespeichert. Durch eine Sammlung solcher Daten lassen sich beispielsweise Karten erstellen.

Vorteilhafterweise wird eine Abfolge der Stützpunkte, in der diese auf dem Objekt angeordnet sind, gespeichert. Dadurch lässt sich ohne aufwendige Auswertung eine Wiedergabe des Objekts erstellen.

In einer besonderen Ausführungsform kann die Zuordnung zu den Ebenen erfolgen, in dem jeweils nur die auf dem Objekt zwischen zwei benachbarten Stützpunkten, die schon zugeordnet wurden, liegenden Stützpunkte betrachtet werden und dies für alle Paare von zugeordneten, benachbarten Stütz- und Ankerpunkten durchgeführt wird, zwischen denen sich auf dem Objekt noch nicht zugeordnete Stützpunkte befinden. Dabei kann vorteilhafterweise die Zuordnung zu Ebenen derart erfolgen, dass jeweils alle die Stützpunkte, die jeweils bei der geschilderten Betrachtung in Bezug auf zugeordnete, benachbarte Stützpunkte und den auf dem Objekt dazwischen liegenden, nicht zugeordneten Stützpunkten den größten Abstand zur Linie aufweisen, einer Ebene zugeordnet werden. Somit wird bei einem solchen Schritt, sofern ein auf dem Objekt dazwischen liegender Stützpunkt vorhanden ist, pro zugeordnetem, benachbartem Stütz- und Ankerpunktepaar ein Stützpunkt der nächsten Ebene zugeordnet. Denkbar ist es auch, bei einer solchen Betrachtung maximal eine vorgegebene Anzahl von Stützpunkte pro Stütz- und Ankerpunktepaar der nächsten Ebene zuzuordnen. Bevorzugt wird jedoch eine vorgegebene maximale Anzahl von eins.

In einer weiteren Ausführungsform werden in den einzelnen Ebenen Knoten vorgesehen, die Teil einer Baumstruktur sind. Dabei sind vorteilhafterweise Knoten gleicher Stufe in einer Ebene angeordnet. Kinder von Knoten sind vorteilhafterweise in hierarchisch niedrigeren Ebenen angeordnet. Die Ankerpunkte bilden dabei Knoten oberster Stufe oder stehen über den in der Ebene unter der der Ankerpunkte bzw. unter den Ankerpunkten angeordneten Knoten der obersten Stufe der Baumstruktur.

Mit Vorteil weist die Hierarchie in der obersten Ebene die Ankerpunkte und in den darunterliegenden Ebenen eine Baumstruktur mit Knoten und Blättern auf.

Vorteilhafterweise werden die Stützpunkte in Schritt ii. den Knoten in den jeweiligen Ebenen zugeordnet und erfolgt insbesondere die Zuordnung zu den Knoten derart, dass dadurch eine Abfolge der Stützpunkte, in der diese auf dem Objekt angeordnet sind gespeichert wird.

Bevorzugt wird jedem Knoten ein Stützpunkt zugewiesen und wird insbesondere in der zweiten Ebene die Anzahl der Knoten gleich der Anzahl der Ankerpunkte minus eins gewählt. Dadurch lassen sich zahlreiche Vorteile, wie beispielsweise eine besonders praktische Darstellung der Reihenfolge der Stützpunkte auf dem Objekt, erreichen.

Dabei wird es bevorzugt, wann jedem Knoten, der Kinder und Enkelkinder, insbesondere jedem Knoten, der Kinder, insbesondere in niedrigeren Ebenen, besitzt zwei Kinder zugeordnet sind.

Vorteilhafterweise wird die Hierarchie so gewählt, dass die Knoten linke oder rechte Knoten darstellen und insbesondere die Zuordnung zu den Knoten derart Erfolgt, dass Stützpunkte, die in eine hierarchisch zwei Stufen niedrigere Ebene oder in der Baumstruktur zwei Stufen weiter unten zugeordnet werden, und die auf dem Objekt zwischen einem Stützpunkt und seinem linken Kind liegende Stützpunkte als rechte Kinder des linken Kindes des Stützpunktes und die auf dem Objekt zwischen einem Stützpunkt und seinem rechten Kind liegende Stützpunkte als linke Kinder des rechten Kindes des Stützpunktes zugeordnet werden.

Dadurch lässt sich eine besonders effektive Abbildung der Reihenfolge der Stützpunkte auf dem Objekt erreichen. Dabei ist die Bezeichnung linker und/oder rechter Knoten nur eine besonders begreifbare. Anstelle von links und rechts können auch andere Kodierungen gewählt werden. Es kommt lediglich darauf an, das es Knoten mindestens zweier, insbesondere zweier, Kategorien gibt, durch die, insbesondere im Zusammenspiel mit der Anordnung in den Ebenen und/oder den Stufen der Baumstruktur eine Abbildung der Reihenfolge der Stützpunkte auf dem Objekt gegeben ist.

Mit weiterem Vorteil werden mindestens bezüglich einer Ebene und/oder eines Knotens Daten zum minimalen und/oder maximalen Abstand der Stützpunkte einer Ebene zur Linie durch alle Stützpunkte der hierarchisch höheren Ebenen und Ankerpunkte abgespeichert.

Mit besonderem Vorteil wird/werden zu jedem Knoten, der nicht Teil der hierarchisch obersten Ebene ist, die Entfernung(en) des/der in dem Knoten gespeicherten Stützpunkte/s von einer Linie durch die benachbarten, hierarchisch höher angeordneten Stützpunkte gespeichert.

Dadurch lässt sich eine schnellere Sortierung bzw. Auswahl der später anzuzeigenden oder zu bearbeitenden Daten anhand der entsprechenden Abstandskriterien durchführen.

Dadurch kann beispielsweise in oder zu einer Ebene gespeichert werden, ab welcher bzw. bis zu/bei welcher Auflösung die darin enthaltenen Stützpunkte zur Darstellung zu verwenden sind.

Auch ist es denkbar, dass Daten verschiedener Objekte zusammen abgespeichert werden und somit in jeder Ebene eines Datensatzes Daten verschiedener Objekte gespeichert sind. Bevorzugt wird jedoch eine Speicherung derart, dass zunächst die Daten verschiedener Objekte getrennt werden und diese dann entsprechend separat hierarchisch gespeichert werden.

Besonders vorteilhaft ist der Einsatz des Verfahrens bezüglich Objekten, die linienförmig sind und einen Anfangs- und Endpunkt aufweisen. In diesem Fall werden vorteilhafterweise Anfangs- und Endpunkte als Ankerpunkte verwendet. Beispielsweise kommen hier Straßen, Pfade, Gebietsgrenzen, Routen, Schienen, Konturen oder ähnliches in Frage. Diese können häufig als Linie vereinfacht behandelt, also strukturiert, gespeichert und/oder angezeigt werden.

Vorteilhafterweise werden darüber hinaus zu den Daten mindestens eines Objektes Informationen bezüglich der Art des Objektes oder dessen Anzeigeeigenschaften bzw. Ausdehnung gespeichert. So lassen sich beispielsweise die Eigenschaften, dass es sich um eine Straße oder einen See handelt, mit erfassen. Auch lassen sich beispielsweise Informationen darüber, bei welcher Auswahl der Anzeigeeigenschaften das Objekt überhaupt angezeigt werden soll bzw. ab welcher Auflösung/welchem Maßstab das Objekt überhaupt angezeigt werden soll, festhalten. So lassen sich beispielsweise Objekte zu Ebenen zuordnen und gemeinsam bearbeiten bzw. aktivieren bzw. deaktivieren. Weitere Informationen, die zusammen mit den Daten des Objektes gespeichert werden, sind denkbar.

Durch ein solches Verfahren lässt sich auf einfache und zuverlässige Weise ein Datensatz erzeugen, der zu einer Anzeige geeignet ist, die auch bei großen Maßstabsveränderungen ohne oder mit geringeren Wartezeiten eine gewünschte Anzeige darstellen kann, insbesondere ohne zwischenzeitlich keine Anzeige darstellen zu können. Reicht die Rechenleistung und/oder Speicherzugriffsgeschwindigkeit bei der Verwendung eines solchen Datensatzes nicht zur Echtzeitdarstellung der angeforderten Information aus, kann zunächst auf das Nachladen der detailreicheren Informationen in niedrigeren Ebenen verzichtet werden und können diese allmählich nachgeladen werden. So lässt sich trotz der geringen Rechenzeit ein Ausfallen der gesamten Anzeige vermeiden.

Gelöst wird die Erfindung auch durch einen Datensatz gemäß Anspruch 4 repräsentierend die Form mindestens eines Objektes, darstellbar durch eine Menge von Stützpunkten. Der Datensatz weist dabei hierarchisch in Bezug zueinander stehende Ebenen auf, in denen die ein Objekt repräsentierenden Daten gespeichert sind. Dabei wird in jeder Ebene eine Teilmenge der das Objekt repräsentierenden Daten gespeichert. Die Zuordnung der Daten zu den Ebenen ist dabei dadurch gegeben, dass in der hierarchisch oberen Ebene Daten mindestens zweier Ankerpunkte ausgewählt aus den Stützpunkten, durch die des mindestens einen Objektes darstellbar ist und/oder zur Speicherung dargestellt wird, gespeichert sind. Die Daten der verbleibenden Stützpunkte sind so auf die Ebenen verteilt, dass der Abstand eines jeden Stützpunktes einer jeden betrachteten Ebene von einer Linie durch die Stützpunkte der hierarchisch über der betrachteten Ebene liegenden Ebenen und Ankerpunkte kleiner ist, als der Abstand jedes Stützpunkts, abgesehen von den Ankerpunkten, der hierarchisch über der betrachteten Ebene liegenden Ebenen von einer Linie durch alle anderen Stützpunkte, gespeichert in allen Ebenen, die hierarchisch über der betrachteten Ebene liegen, und die Ankerpunkte. Vorteilhafterweise wird dabei die Betrachtung jeweils auf eine Telmenge der Stützpunkte eingeschränkt, die zwischen benachbarten Stützpunkten höherer Ebene auf dem Objekt liegt. Somit weisen dann Stützpunkte einer niedrigeren Ebene immer einen kleineren Abstand von einer Linie durch die benachbarten Stützpunkte der höheren Ebenen auf, als dies für einen Stützpunkt zwischen benachbarten Stützpunkten höher Ebene bezüglich einer Linie durch benachbarte Stützpunkte der wiederum höheren Ebenen der Fall ist.

Anschaulich lässt sich dies insbesondere durch eine Baumstruktur aufweisend Zweige mit Knoten, die untereinander jeweils eine Eltern-Kind-Beziehung aufweisen, wobei Eltern und Kinder jeweils in unterschiedlichen Stufen der Baumstruktur angeordnet sind und ein Kind eines Knotens der Stufe n in der Stufe n + 1 angeordnet ist, derart beschreiben, dass in jedem Zweig Stützpunkte der Stufe n einen kleineren Abstand zu einer Linie durch die Stützpunkte der Stufen <n aufweisen als die Stützpunkte der Stufe n - 1 des gleichen Zweigs zu einer Linie durch die Stützpunkte des Zweiges der Stufen <(n - 1).

Dass bedeutet, dass die Abstände der Punkte in hierarchisch niedrigeren Ebenen bezogen auf die Linie durch alle schon gespeicherten Stützpunkte und Ankerpunkte, gegebenenfalls bei eingeschränkter Betrachtung der benachbarten Stützpunkte, insbesondere innerhalb eines Zweigs, jeweils geringer wird. Dadurch erhöht sich der Detailgrad der Darstellung unter Verwendung von Stützpunkten niedriger Ebenen beziehungsweise niedriger angeordneter Knoten.

Soll der Detailgrad verringert werden, reicht es aus, die Stützpunkte niedrigerer Ebenen/Knoten nicht weiter zu verwenden und die Darstellung allein auf Stützpunkte/Knoten höherer Ebenen zu basieren.

Durch einen solchen Datensatz lassen sich entsprechende Objekte so abspeichern bzw. vorhalten, dass eine unterbrechungsfreie Darstellung über den gesamten Maßstabswahlbereich möglich ist.

Bezüglich der Reihenfolge liegt/liegen vorteilhafterweise der/die Stützpunkt(e) des/der Knoten(s) der obersten Stufe, Stufe null, zwischen den benachbarten Ankerpunkten. Dies könnte auch durch eine entsprechende Baumstruktur, die den/die Knoten der obersten Stufe zu einem rechten Kind eines ersten Ankerpunkts und zu einem linken eines zweiten Ankerpunkts macht, abgebildet sein.

Des Weiteren liegt bevorzugt ausgehend von einem Stützpunkt eines Knotens der Stützpunkt des rechten Kindes des Knotens null auf der anderen Seite des Stützpunkts des Knotens als der Stützpunkt des linken Kindes des Knotens.

Auch liegt bevorzugt ein Stützpunkt eines Knotens auf dem Objekt jeweils zwischen dem Stützpunkt seines Elternknotens und seines Großelternknotens.

Besonders vorteilhaft ist die Verwendung eines solchen Datensatzes bei dem Vorhalten von linienförmigen Objekten, die einen Anfangs- und Endpunkt aufweisen, wobei Anfangs- und Endpunkt dann vorteilhafterweise als Ankerpunkte verwendet werden. Darüber hinaus können weitere Daten im Datensatz gespeichert werden, wie beispielsweise Daten bezüglich des minimalen und/oder maximalen Abstands der Stützpunkte einer Ebene zur Linie durch alle Stützpunkte aller hierarchisch höheren Ebenen und Ankerpunkte oder weitere Eigenschaften bezüglich des Objektes, der Anzeigeeigenschaften und/oder Ausdehnung.

Die geschilderten Verfahrensmerkmale lassen sich mit Vorteil auch im Datensatz entsprechend umsetzen. Dies gilt insbesondere für die geschilderten Baumstrukturen und deren vorteilhafte Ausbildungen, bei denen insbesondere die Reihenfolge der Stützpunkte auf dem Objekt wiedergegeben wird.

Gelöst wird die Aufgabe auch durch ein Verfahren zur maßstabsveränderlichen nachladeoptimierten Anzeige eines Datensatzes repräsentierend die Form mindestens eines Objektes, wie oben geschildert oder erzeugt nach einem Verfahren, wie ebenfalls oben geschildert, zur Darstellung des mindestens einen Objektes. Dabei werden je nach gewähltem Anzeigemaßstab neben den Ankerpunkten nur Stützpunkte einer Auswahl von Ebenen und/oder Knoten beginnend von der hierarchisch obersten Ebene/Stufe hinunter bis zu einer hierarchisch um eine oder mehrere Stufen niedrigeren Anzeigegrenzebene bzw. hinunter bis zu hierarchisch um eine oder mehrere Stufen niedrigeren Anzeigegrenzknoten dargestellt. Dabei wird/werden als Anzeigegrenzebene eine Ebene bzw. -knoten einer oder mehrere Stufen abhängig vom Anzeigemaßstab gewählt. Durch eine solche Auswahl der zur Darstellung verwendeten Stützpunkte lässt sich auch bei geringerer Rechenkapazität bei veränderlichem Maßstab eine unterbrechungsfreie Darstellung realisieren. Dabei ist bei mehreren Stützpunkten, die untereinander nicht ausgezeichnet sind das Problem der Reihenfolge auf dem Objekt zu lösen. Dies ist teilweise durch die Kenntnis der Zuordnungsvorschrift bei der Datenerzeugung zu lösen. Bevorzugt beinhalten die Daten jedoch entsprechende Auszeichnung, insbesondere durch Zuweisung zu Knoten, Ebenen und/oder Ordnungsnummer und/oder Ähnliches.

Besonders vorteilhaft wird dabei als Anzeigegrenzebene eine hierarchisch höher liegende Ebene gewählt, wenn der Maßstab/die Auflösung über ein bestimmtes Maß hinaus verkleinert wird und als Anzeigegrenzebene eine hierarchisch niedriger liegende Ebene gewählt, wenn der Maßstab/die Auflösung über ein bestimmtes Maß hinaus vergrößert wird.

Dabei kann die Auswahl der zu berücksichtigenden Stützpunkte bzw. Ebenen/Knoten dadurch erfolgen, dass jeweils die entsprechenden Abstände berechnet und eine darauf basierende Entscheidung getroffen wird. Vorteilhafterweise wird die Auswahl jedoch basierend auf entsprechend zusätzlich gespeicherten Daten, wie beispielsweise Informationen über die minimalen und/oder maximalen Abstände der Stützpunkte einer Ebene zu einer Linie durch alle Stützpunkte und Ankerpunkte der hierarchisch höheren Ebenen/Knoten, insbesondere auf benachbarte Stützpunkte des jeweiligen Zweigs beschränkt, durchgeführt.

Denkbar ist auch, dass eine solche Entscheidung basierend auf gespeicherten Informationen bezüglich der Verwendung der Ebenen/Knoten abhängig von einem Maßstab/einer Auflösung getroffen wird. So kann beispielsweise mindestens ein Grenzmaßstab mit einigen oder jeder/m Ebene(n)/Knoten gespeichert sein und die Auswahl auf diesen Informationen basieren.

Mit besonderem Vorteil wird die Anzeigegrenzebene jeweils so gewählt, dass die niedrigste Ebene als Anzeigegrenzebene gewählt wird, für die gilt, dass alle Stützpunkte der gewählten Ebene einen Abstand zu einer Linie durch alle Stützpunkte aller hierarchisch höheren Ebenen aufweisen, der größer oder gleich der Auflösung der Anzeige ist. Dadurch werden nur solche Stützpunkte verwendet, die in Ebenen gespeichert sind, bei denen alle Stützpunkte zu einer relevanten Veränderung der Anzeige führen. Solche Ebenen, die Stützpunkte enthalten, die bei der gewählten Auflösung bei zusätzlicher Berücksichtigung keine relevante Veränderung der Anzeige herbeiführen würden, werden somit nicht berücksichtigt, dadurch der Anzeigeaufwand verringert.

Mit besonderem Vorteil können auch alle Stützpunkte verwendet werden, für die gilt, dass Ihr Abstand zur Linie durch alle anderen verwendeten und/oder in höheren oder hierarchisch gleichen Ebenen angeordnete Stützpunkte größer ist als 1 Punkt der Anzeige pro Maßstab der Anzeige. Die Stützpunkte werden dann also verwendet, wenn der Abstand von der Linie größer oder gleich dem Abstand der Pixel multipliziert mit der aktuellen Maßstabszahl ist. Dabei kann, wenn beispielsweise der Pixelabstand in verschiedene Richtungen unterschiedliche ist, auch eine solche Richtungsabhängigkeit berücksichtigt werden. Beträgt der Abstand zwischen Pixeln in der Richtung beziehungsweise am Ort der Senkrechten durch den fraglichen Stützpunkt auf die Linie beispielsweise 0,25 mm und ist ein Maßstab gewählt von 1mm/100m (Displaystrecke/Naturstrecke), so wird der Stützpunkt berücksichtigt, wenn sein Abstand größer ist als 25m.

Auch lässt sich die Auswahl Knotenbasiert durchführen, insbesondere mit den genannten Kriterien, so dass in verschiednen Zweigen unter umständen Knoten verschiedener Stufen als Anzeigegrenzknoten verwendet werden. Insbesondere werden alle Stützpunkte bzw. alle Stützpunkte von Knoten verwendet, für die gilt, dass Ihr Abstand zur Linie durch alle anderen verwendeten, insbesondere dem gleichen Zweig angehörenden benachbarten, Stützpunkte größer ist als 1 Punkt der Anzeige pro Maßstab der Anzeige. Die Stützpunkte/Knoten werden dann also verwendet, wenn der Abstand von der Linie durch benachbarte Stützpunkte höherer Ebene größer oder gleich dem Abstand der Pixel multipliziert mit der aktuellen Maßstabszahl ist.

Mit besonderem Vorteil kann die Anzeigegrenzebene so gewählt werden, dass die niedrigste Ebene als Anzeigegrenzebene gewählt wird, für die gilt, dass alle Stützpunkte der gewählten Ebene bei gegebener Auflösung nicht auf dem dargestellten Objekt liegen würden, wenn als Grenzebene eine hierarchisch höhere Ebene gewählt würde. Es werden dann zur Anzeige keine Ebenen berücksichtigt, die Stützpunkte beinhalten, die bei der gewählten Darstellung keiner Änderung der Anzeige herbeiführen würden.

Alternativ kann zusätzlich aus der hierarchisch unterhalb der als Anzeigegrenzebene liegenden Ebene jeder Stützpunkt zur Darstellung verwendet werden, der bei der gegebenen Auflösung nicht auf dem dargestellten Objekt liegen würde, wenn dieser Stützpunkt nicht zur Darstellung verwendet würde. Bei einem solchen Vorgehen kann neben den durch die Auswahl einer Ebene ausgewählten Stützpunkte auch ein solcher Stützpunkt berücksichtigt werden, der in einer niedrigeren Ebene gespeichert ist, jedoch bei der gewählten Auflösung noch zu einer Veränderung der Darstellung führen würde. Wird beispielsweise die Auswahl der Anzeigegrenzebene basierend auf entsprechenden zusätzlich gespeicherten Informationen durchgeführt, könnte in der niedrigeren Ebene oder den niedrigeren Ebenen eine Stützpunkt basierte Auswahl, beispielsweise durch Berechnung des Abstandes oder durch Auswertung des gespeicherten Abstandes durchgeführt und dadurch die Darstellung weiter verbessert werden.

Bei der Verwendung von Knoten kann vorteilhafterweise eine Auswahl der anzuzeigenden Stützpunkte auf Basis der Knoten derart erfolgen, dass aus unterschiedlichen Zweigen der Baumstruktur Anzeigegrenzknoten auch in unterschiedlichen Hierarchieebenen gewählt werden. Eine solche Auswahl erfolgt vorteilhafterweise auf Basis des, insbesondere gespeicherten, Abstandes des Stützpunktes von der Linie zwischen auf dem Objekt benachbarten Stützpunkten höherer Ebene derart, dass in jedem Zweig soweit Stützpunkte in Knoten in hierarchisch niedrigeren Ebenen oder höheren Stufen der Baumordnung zur Anzeige verwendet werden, bis ein Stützpunkt oder Knoten eine vorgegebene, beispielsweise eine der oben geschilderten, Anforderung nicht mehr erfüllt.

Gelöst wird die Aufgabe auch durch eine digitale Karte aufweisend mindestens einen Datensatz wie oben geschildert oder einen Datensatz gespeichert nach einem Verfahren wie oben geschildert und insbesondere eine Vorrichtung zur Durchführung eines Verfahrens zur Anzeige der Daten, wie oben geschildert. Eine solche digitale Karte kann somit eine Funktion zur Anzeige, und insbesondere zur Maßstabsveränderung aufweisen.

Ebenfalls gelöst wird die Aufgabe durch ein Navigationsgerät aufweisend eine digitale Karte und/oder eingerichtet zur Durchführung eines Verfahrens zur Anzeige wie oben geschildert.

Ebenfalls gelöst wird die Aufgabe durch eine Navigationssoftware, aufweisend eine digitale Karte wie oben geschildert und/oder eingerichtet zur Durchführung eines Verfahrens zur Anzeige der Daten, wie oben geschildert.

Gelöst wird die Aufgabe auch durch einen Datenträger aufweisend eine entsprechende Navigationssoftware oder eine entsprechende digitale Karte.

Ebenfalls gelöst wird die Aufgabe durch ein mobiles Endgerät, insbesondere Mobiltelefon, Tablet PC oder Smartphone, aufweisend eine digitale Karte wie oben geschildert und/oder eingerichtet zur Durchführung eines Verfahrens zur Anzeige der Daten, wie oben geschildert.

Weitere Ausführungsformen und Vorteile sollen rein exemplarisch anhand der folgenden schematischen Zeichnungen geschildert werden. Dabei zeigen:
- Fig. 1: eine schematisch Übersicht zur Erzeugung eines erfindungsgemäßen Datensatzes;
- Fig. 2: verschiedene Darstellungen eines entsprechenden Datensatzes; und
- Fig. 3: schematische Übersicht zur Erzeugung einer Baumstruktur sowie einer Baumstruktur.

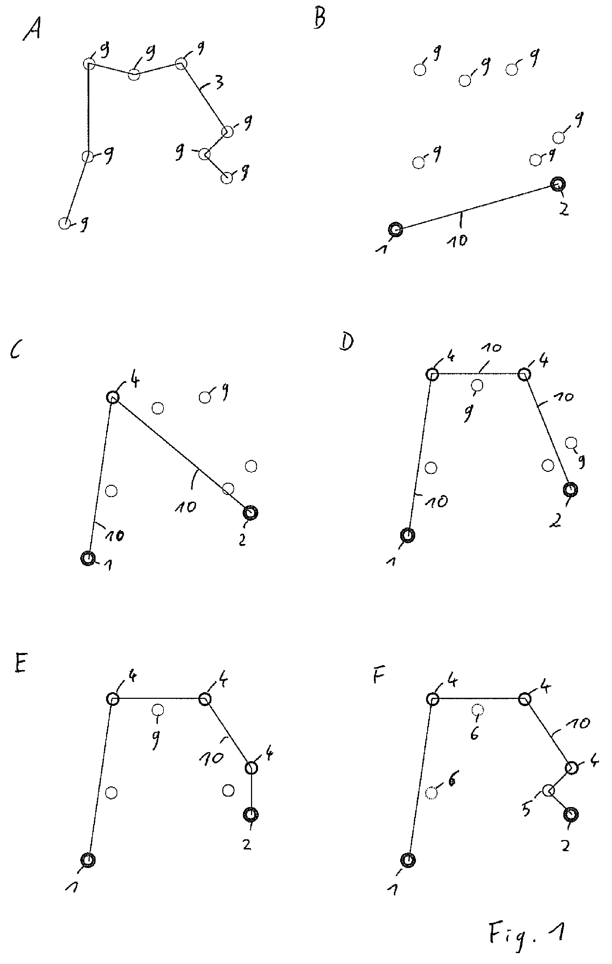

Fig. 1 veranschaulicht die Erstellung eines erfindungsgemäßen Datensatzes bzw. das erfindungsgemäße Verfahren zur Erstellung. In Fig. 1a gezeigt ist ein Objekt 3, das eine Linie ist. Darüber hinaus gezeigt sind die Stützpunkte 9, die zur Erzeugung einer Darstellung verwendet werden können. Die Stützpunkte 9 sind noch keiner Ebene zugeordnet. Zunächst wird, nach der Festlegung der Stützpunkte 9 wie in Fig. 1a gezeigt, die Festlegung der Ankerpunkte 1, 2 durchgeführt, was in Fig. 1b zu erkennen ist, und werden diese in der hierarchisch obersten Ebene gespeichert.

Anschließend werden die Ankerpunkte 1, 2 mit einer gedachten Hilfslinie 10 verbunden und sodann der Stützpunkt 9 ermittelt, der den größten Abstand zur Hilfslinie 10 aufweist. Dieser Stützpunkt 9 wird sodann einer Ebene zugeordnet. In diesem Fall wird er nicht der ersten Ebene, der die Ankerpunkte 1, 2 zugeordnet wurden, zugeordnet, sondern der zweiten Ebene, und stellt somit einen Stützpunkt 4 der zweiten Ebene dar. Dies ist in Fig. 1c zu erkennen. Sodann werden neue Hilfslinien 10 durch alle zugeordneten Stützpunkte 4 und Ankerpunkte 1, 2 gelegt und erneut der Stützpunkt 9 ermittelt, der den größten Abstand zu den Linien aufweist. Dieser Stützpunkt 9 wird sodann einer Ebene zugeordnet. In diesem Fall wird auch dieser Stützpunkt 9 der zweiten Ebene zugeordnet und stellt somit ebenfalls einen Stützpunkt 4 der zweiten Ebene dar. Dies ist in Fig. 1d zu erkennen. Ebenfalls gezeigt sind in Fig. 1d die neuen Hilfslinien 10. Ausgehend von diesen neuen Hilfslinien 10 wird erneut ein Stützpunkt 9 ermittelt, der den größten Abstand zu den Hilfslinien 10 aufweist. Dieser Stützpunkt 9 wird sodann einer Ebene zugeordnet. In diesem Fall wird auch dieser Punkt noch der zweiten Ebene zugeordnet, so dass er ebenfalls einen Stützpunkt 4 der zweiten Ebene darstellt. Dies ist in Fig. 1e zu erkennen. Ebenfalls in Fig. 1 e gezeigt sind die neuen Hilfslinien 10, die durch die Ankerpunkte 1, 2 und alle schon zugeordneten Stützpunkte 4 verlaufen. Ausgehend von diesen wird erneut der Stützpunkt 9 mit dem größten Abstand ermittelt.

Dieser Stützpunkt wird hier der dritten Ebene zugeordnet und stellt somit einen Stützpunkt 5 der dritten Ebene dar, was in Fig. 1f zu erkennen ist. Ebenfalls zu erkennen sind die neuen Hilfslinien 10 durch die Ankerpunkte 1, 2 und alle zugeordneten Stützpunkte 4, 5. Die weiteren Stützpunkte 9 werden der vierten Ebene zugeordnet und stellen somit Stützpunkte 6 der vierten Ebene dar, was ebenfalls in Fig. 1f gezeigt ist.

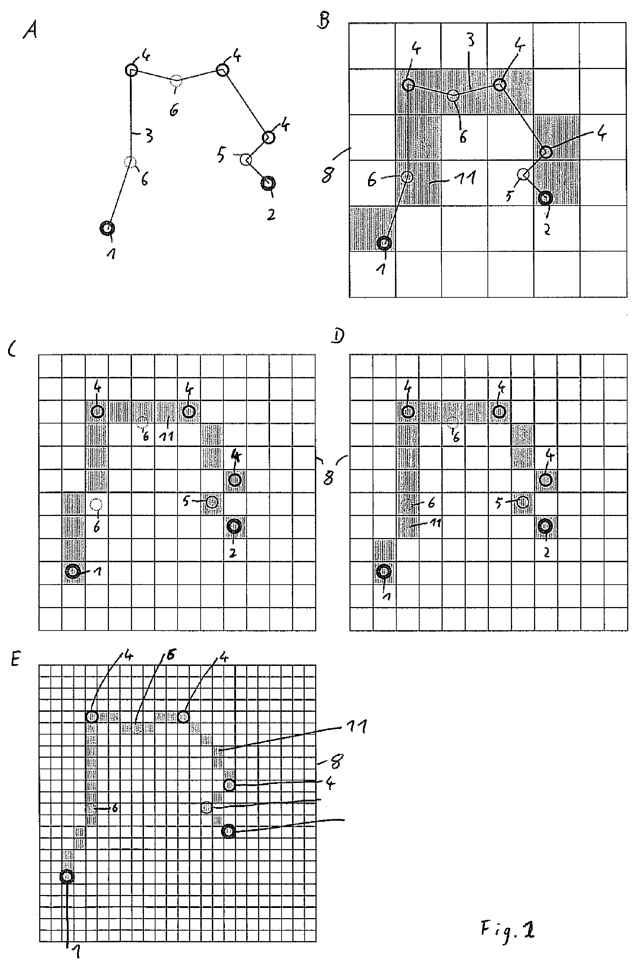

Fig. 2a zeigt noch einmal das Objekt 3 zusammen mit dem ersten Ankerpunkt 1, dem zweiten Ankerpunkt 2, den Stützpunkte 4 der zweiten Ebene, den Stützpunkten 5 der dritten Ebene sowie dem Stützpunkt 6 der vierten Ebene.

Fig. 2b veranschaulicht die Darstellung 11 des Objektes 3 in einem Raster 8. Dabei stellt das Raster 8 eine Anzeige dar, die über Pixel arbeitet und durch Farbveränderung der Pixel eine entsprechende Darstellung 11 bewirken kann. Zur Erzeugung der Darstellung 11 wurden in diesem Fall lediglich die Stützpunkte 4 der zweiten Ebene sowie die Ankerpunkte 1 und 2 verwendet und eine Verbindung zwischen diesen Punkten durch entsprechende Farbveränderung als Darstellung 11 hervorgehoben.

Fig. 2c zeigt eine Darstellung 11 bei verkleinertem Raster 8, also bei vergrößerter Auflösung. Hier wurden zur Erzeugung der Darstellung 11 die Ankerpunkte 1, 2 sowie die Stützpunkte 4 in zweiter Ebene und der Stützpunkt 5 der dritten Ebene berücksichtigt. Die Darstellung 11 wurde durch farbliche Veränderung von Verbindungslinien zwischen diesen Anker- bzw. Stützpunkten 1, 2, 4, 5 erzeugt.

Fig. 2d zeigt eine alternative Darstellung 11 im gleichen Raster 8. Dabei wurden jedoch aus der vierten Ebene diejenigen Stützpunkte 6 berücksichtigt, die zu einer Veränderung der Darstellung führen würden. So wurde beispielsweise der mittig links angeordnete Stützpunkt 6 der vierten Ebene zur Erzeugung der Darstellung 11 berücksichtigt.

Fig. 2e zeigt eine weitere Darstellung 11 des Objektes 3 in weiter verkleinertem Raster 8. Hier wurden zur Darstellung auch sämtliche Stützpunkte 6 der vierten Ebene verwendet.

Durch die Abfolge der Figuren 2b, c bzw. d und e kann veranschaulicht werden, wie sich das Zoomen, also die Veränderung des Maßstabes auf die Darstellung 11 auswirkt, wenn unterschiedliche Stützpunkte 4, 5 und 6 berücksichtigt bzw. nicht berücksichtigt werden.

Weitere vorteilhafte Ausgestaltungen lassen sich durch den Fachmann entsprechend auffinden und an den jeweiligen Anwendungszweck anpassen.

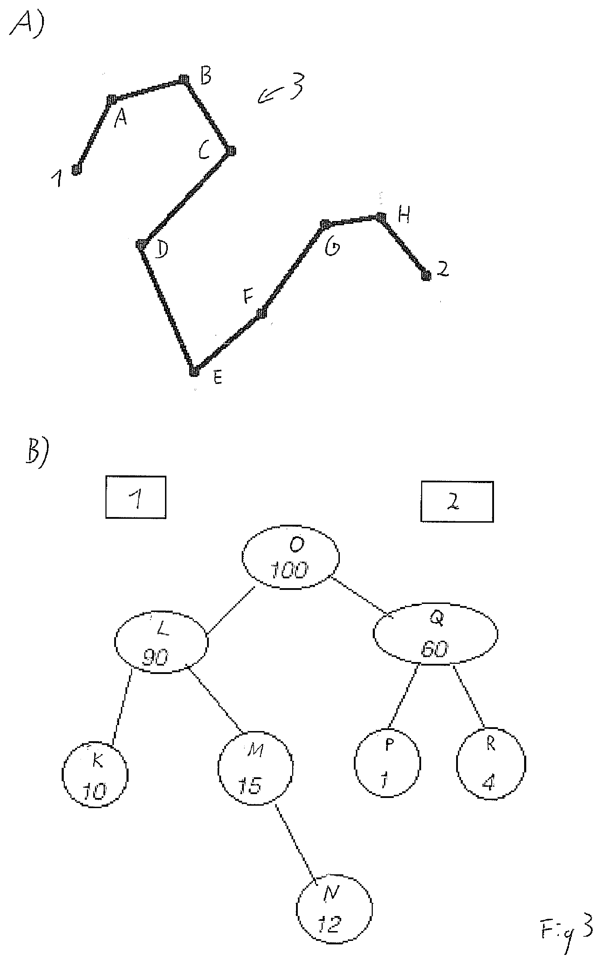

Fig. 3A zeigt ein Objekt 3. Darauf zu erkennen sind ein erster Ankerpunkt 1, ein zweiter Ankerpunkt 2 sowie weitere Stützpunkte A - H. Zur Erzeugung eines erfindungsgemäßen Datensatzes werden zunächst die Ankerpunkte 1, 2 festgelegt. Darauf wird aus der Teilmenge der Stützpunkte, die zwischen den Ankerpunkten 1,2 liegen, in diesem Fall Stützpunkte A - H, derjenige bestimmt, der von der Hilfslinie zwischen den Ankerpunkten 1, 2 den größten Abstand aufweist. Dies ist Stützpunkt E. Er weist einen Abstand von 100 auf.

Stützpunkt E wird einer Ebene, genauer einem Knoten E - H, in diesem Fall dem obersten Knoten O zugeordnet. Knoten O ist ein Knoten der Stufe null. Stützpunkt E teilt nun als zugeordneter Stützpunkt die übrigen Stützpunkte A - D und F bis H in zwei Teilmengen A - D und F - H. Stützpunkt E bildet also mit den Ankerpunkten 1, 2 jeweils ein Stütz-/Ankerpunktpaar 1E, E2.

Ausgehend von je einer Hilfslinie zwischen den Stütz-/Ankerpunktpaaren wird der Stützpunkt der Teilmengen der Stützpunkte gesucht, der jeweils den größten Abstand zur entsprechenden Hilfslinie durch die benachbarten Anker-/Stützpunkte des zugeordneten Stütz-/Ankerpunktpaars aufweist.

Bezüglich der Teilmenge der Stützpunkte A - D ist das entsprechende Stütz-/Ankerpunktpaar das Paar 1 E. Der von der Linie durch Ankerpunkt 1 und Stützpunkt E am weitesten entfernte Stützpunkt dieser Teilmenge ist der Stützpunkt B. Er wird dem Knoten L (vgl. Fig. 3B) zugeordnet. Knoten L ist ein linkes Kind des Knotens O und gehört der Stufe eins an.

Bezüglich der Teilmenge der Stützpunkte F - H ist das entsprechende Stütz-/Ankerpunktpaar das Paar E2. Der von der Linie durch Stützpunkt E und Ankerpunkt 2 am weitesten entfernte Stützpunkt dieser Teilmenge ist der Stützpunkt G. Er wird dem Knoten Q zugeordnet. Knoten Q ist ein rechtes Kind des Knotens O und gehört der Stufe eins an.

Die zugeordneten Stützpunkte B und G teilen die Teilmengen erneut in nun zu betrachtende vier Teilmengen A, C - D, F, H. Die relevanten Stütz-/Ankerpunktpaare sind für Teilmenge A das Stütz-/Ankerpunktpaar 1 B, für Teilmenge C - D das Stütz-/Ankerpunktpaar BE, für Teilmenge F das Stütz-/Ankerpunktpaar EG und für Teilmenge H das Stütz-/Ankerpunktpaar G2.

Nun wird aus den Teilmengen erneut der Stützpunkt mit dem größten Abstand zu der Linie durch das entsprechende Stütz-/Ankerpunktpaar bestimmt. Bei den nur einen Stützpunkt enthaltenden Teilmengen A, F, H ist dies trivial. Diese Stützpunkte werden Knoten K, P und R zugeordnet. Sie sind Knoten zweiter Stufe. Knoten P ist ein linkes Kind des Knotens Q und somit ein linker Knoten. Knoten R ist ein rechtes Kind des Knotens Q und somit ein rechter Knoten. Knoten K ist ein linkes Kind des Knotens L.

Bezüglich der Teilmenge C - D ist die Bestimmung nicht trivial. Der Stützpunkt mit dem größten Abstand ist der Stützpunkt D. Er wird dem Knoten N zugeordnet. Knoten N ist ein Knoten der Stufe drei und ein rechtes Kind des Knotens M.

Der verbleibende Stützpunkt liegt zwischen dem Stütz-/Ankerpunktpaar BD. Er wird einem nicht gezeigten Knoten der Stufe vier als rechtes Kind des Knotens N zugeordnet.

Fig. 3B zeigt die Struktur aus Ankerpunkten 1, 2 und Baumstruktur mit Knoten K - R. Die Anzahl der Knoten der Stufe null, hier Knoten O ist um eins geringer als die Anzahl der gewählten Ankerpunkte 1, 2. Der Baumstruktur ist auch der Abstand des jedem Knoten zugeordneten Stützpunktes zur Hilfslinie durch das benachbarte Stütz-/Ankerpunktpaar zu entnehmen. Er ist in der Darstellung unterhalb des Bezugszeichens jedes Knotens angegeben.

Der Struktur ist auch unabhängig von der alphabetischen Benennung der Knoten die Reihenfolge der Stützpunkte auf dem Objekt zu entnehmen. Dies ist auf zwei Arten möglich.

Zunächst liegt der Stützpunkt des Knotens der Stufe null, Knoten O, Stützpunkt E zwischen den Ankerpunkten 1, 2. Dies könnte auch durch eine entsprechende Baumstruktur, die den Knoten 0 zu einem rechten Kind des Ankerpunkts 1 und zu einem linken Kind des Ankerpunkts 2 macht, betont werden.

Des Weiteren liegt ausgehend von dem Stützpunkt E des Knotens O der Stufe null der Stützpunkt G des rechten Kindes des Knotens O der Stufe null auf der anderen Seite des Stützpunkts E als der Stützpunkt B des linken Kindes. Dies setzt sich jeweils für Knoten der folgenden Stufen eins bis n fort.

Auch liegt ein Stützpunkt A, C, F, H eines Knotens K, M, P, R auf dem Objekt jeweils zwischen dem Stützpunkt B, G seines Elternknotens L, Q und seines Großelternknotens O.

### Bezugszeichenliste

- 1: erster Ankerpunkt
- 2: zweiter Ankerpunkt
- 3: Objekt
- 4: Stützpunkt der zweiten Ebene
- 5: Stützpunkt der dritten Ebene
- 6: Stützpunkt der vierten Ebene
- 7: zusätzlicher Stützpunkt
- 8: Raster
- 9: Stützpunkt, nicht zugeordnet
- 10: Hilfslinie
- 11: Darstellung des Objekts
- A - H: Stützpunkt
- K - R: Knoten

## Patentansprüche

1. Computerimplementiertes Verfahren zum Strukturieren und/oder Speichern von Daten repräsentierend die Form mindestens eines Objekts (3), insbesondere eines 2-dimensionalen Objekts, darstellbar durch eine Menge von Stützpunkten (9),
a. wobei die die Stützpunkte, durch die das Objekt darstellbar und/oder zur Strukturierung und/oder Speicherung dargestellt ist, repräsentierenden Daten in einer Hierarchie aufweisend mindestens zwei Ebenen strukturiert und/oder gespeichert werden,
b. wobei jeder Ebene eine Teilmenge der Daten zugeordnet wird und/oder in jeder Ebene eine Teilmenge der Daten gespeichert wird,
c. wobei die Zuordnung und/oder Speicherung der Daten zu den Ebenen dadurch erfolgt, dass
i. aus der Menge von Stützpunkten (9) mindestens zwei Ankerpunkte (1, 2) bestimmt werden, deren Daten der hierarchisch obersten Ebene zugeordnet werden und/oder in der hierarchisch obersten Ebene gespeichert werden,
ii. von den in der Menge verbleibenden Stützpunkten (9) oder jeweils der Teilmenge
der zwischen zwei auf dem Objekt benachbarten bereits zugeordneten und/oder gespeicherten Stützpunkten liegenden Stützpunkte
nacheinander jeweils der Stützpunkt (4, 5, 6) ausgewählt wird, der den größten Abstand von einer Linie (10) durch
die schon zu Ebenen zugeordneten und/oder gespeicherten, insbesondere zu dem Stützpunkt benachbarten, Stützpunkte (4, 5) und Ankerpunkte (1,2) aufweist, und
die Daten dieses ausgewählten Stützpunktes einer Ebene zugeordnet und/oder in einer Ebene gespeichert werden,
iii. wobei die Zuordnung zu Ebenen und/oder Speicherung in Ebenen in absteigender Hierarchie der Ebenen erfolgt,
wobei die Hierarchie in der obersten Ebene die Ankerpunkte aufweist und die darunterliegenden Ebenen eine Baumstruktur mit Knoten und Blättern bilden, wobei die Stützpunkte in Schritt ii. den Knoten in den jeweiligen Ebenen zugeordnet und/oder zu den Knoten in den jeweiligen Ebenen gespeichert werden, **dadurch gekennzeichnet, dass** jedem Knoten ein Stützpunkt zugeordnet und/oder zu jedem Knoten ein Stützpunkt gespeichert wird und die Zuordnung und/oder Speicherung zu den Knoten derart erfolgt, dass dadurch eine Abfolge der Stützpunkte, in der diese auf dem Objekt angeordnet sind, gegeben ist und/oder gespeichert wird.

2. Verfahren nach einem der vorstehenden Ansprüche wobei die Zuordnung und/oder Speicherung in Schritt ii. so erfolgt, dass einer Ebene jeweils alle Stützpunkte zugeordnet und/oder gespeichert werden, die unter den auf dem Objekt zwischen jeweils zwei schon zugeordneten und/oder gespeicherten und unter Auslassung der noch nicht zugeordneten und/oder gespeicherten Stützpunkte benachbarten Stützpunkten liegenden Stützpunkten den größten Abstand von einer Linie durch diese schon zugeordneten und/oder gespeicherten benachbarten Stützpunkte aufweisen.

3. Verfahren nach einem der vorstehenden Ansprüche, **dadurch gekennzeichnet, dass** das Objekt (3) linienförmig ist und einen Anfangs- und Endpunkt aufweist und Anfangs- und Endpunkt als Ankerpunkte (1, 2) verwendet werden.

4. Datensatz zur Durchführung eines Verfahrens nach einem der Ansprüche 5 bis 7 repräsentierend die Form mindestens eines Objekts (3), insbesondere eines 2-dimensionalen Objekts, darstellbar durch eine Menge von Stützpunkten (9),
a. wobei der Datensatz hierarchisch in Bezug zueinander stehende Ebenen aufweist, in denen die die Stützpunkte, durch die das Objekt darstellbar und/oder zur Strukturierung und/oder Speicherung dargestellt ist, repräsentierenden Daten gespeichert sind,
b. wobei in jeder Ebene eine Teilmenge der Daten gespeichert ist,
c. wobei die Zuordnung der Daten zu den Ebenen gegeben ist durch
i. in der hierarchisch obersten Ebene sind Daten mindestens zweier Ankerpunkte (1, 2) ausgewählt aus den Stützpunkten (9) des mindestens einen Objekts (3) gespeichert,
ii. die Daten der verbleibenden Stützpunkte (9) sind so auf die Ebenen verteilt, dass
der Abstand eines jeden betrachteten Stützpunktes einer jeden betrachteten Ebene einen kleineren Abstand
von einer Linie (10) durch die,
insbesondere zu dem betrachteten Stützpunkt benachbarten,
Stützpunkte der hierarchisch über der betrachteten Ebene liegenden Ebenen
aufweist als
jeder,
insbesondere jeder zwischen den zum betrachteten Stützpunkt benachbarten Stützpunkten höherer Ebene als der betrachteten Ebene liegende,
Stützpunkt, abgesehen von den Ankerpunkten (1, 2),
der hierarchisch über der betrachteten Ebene liegenden Ebenen bezüglich einer Linie durch alle anderen,
insbesondere alle benachbarten,
Stützpunkte und Ankerpunkte (1,2), gespeichert in allen Ebenen, die hierarchisch über der betrachteten Ebene liegen,
wobei die Hierarchie in der obersten Ebene die Ankerpunkte aufweist und die darunter liegenden Ebenen eine Baumstruktur mit Knoten und Blättern bilden, wobei die Stützpunkte gemäß ii. den Knoten in den jeweiligen Ebenen zugeordnet sind, **dadurch gekennzeichnet, dass** jedem Knoten ein Stützpunkt zugewiesen wird und die Zuordnung zu den Knoten derart gegeben ist, dass dadurch eine Abfolge der Stützpunkte, in der diese auf dem Objekt angeordnet sind, gespeichert ist.

5. Verfahren zur maßstabsveränderlichen und nachladeoptimierten Anzeige eines Datensatzes repräsentierend die Form mindestens eines Objekts (3) nach Anspruch 4 oder erzeugt nach einem der Ansprüche 1 bis 3 zur Darstellung (11) des mindestens einen Objekts (3),
wobei je nach gewähltem Anzeigemaßstab (8) neben den Ankerpunkten (1, 2) nur Stützpunkte (4, 5, 6) einer Auswahl von Ebenen und/oder Knoten beginnend von der hierarchisch obersten Ebene hinunter bis zu einer hierarchisch um eine oder mehrere Stufen niedrigeren Anzeigegrenzebene und/oder hinunter bis zu einem oder mehreren in unterschiedlichen Zweigen hierarchisch um eine oder mehrere Stufen niedrigeren Anzeigegrenzknoten dargestellt werden, wobei die als Anzeigegrenzebene gewählte Ebene und/oder die Anzeigegrenzknoten abhängig vom Anzeigemaßstab gewählt wird/werden.

6. Verfahren nach Anspruch 5, wobei als Anzeigegrenzebene und/oder Anzeigegrenzknoten eine hierarchisch höher liegende Ebene und/oder ein oder mehrere hierarchisch höher liegende Anzeigegrenzknoten gewählt wird/werden, wenn der Maßstab über ein bestimmtes Maß hinaus verkleinert wird und als Anzeigegrenzebene oder Anzeigegrenzknoten eine hierarchisch niedriger liegende Ebene und/oder ein oder mehrere hierarchisch höher liegende Anzeigegrenzknoten gewählt wird/werden, wenn der Maßstab über ein bestimmtes Maß hinaus vergrößert wird.

7. Verfahren nach einem der vorstehenden Ansprüche 5 bis 6, wobei die Anzeigegrenzebene und/oder die Anzeigegrenzknoten so gewählt wird/werden, dass die niedrigste Ebene als Anzeigegrenzebene gewählt wird und/oder die niedrigsten Knoten als Anzeigegrenzknoten gewählt werden, für die gilt, dass alle Stützpunkte der gewählten Ebene und/oder der gewählten Knoten einen Abstand zu einer Linie durch alle Stützpunkte aller hierarchisch höheren Ebenen und Ankerpunkte (1,2), insbesondere durch die auf dem Objekt benachbarten Stützpunkte hierarchisch höherer Knoten und/oder Ebenen, aufweisen, der gleich oder insbesondere größer der Auflösung der Anzeige ist.

8. Digitale Karte aufweisend mindestens einen Datensatz nach Anspruch 4 oder gespeichert und/oder strukturiert nach einem der Ansprüche 1 bis 3.

9. Navigationsgerät aufweisend eine digitale Karte nach Anspruch 8 und/oder eingerichtet zur Durchführung eines Verfahrens nach einem der Ansprüche 5 bis 7.

10. Navigationssoftware aufweisend eine digitale Karte nach Anspruch 8 und/oder eingerichtet zur Durchführung eines Verfahrens nach einem der Ansprüche 5 bis 7.

11. Datenträger aufweisend eine Navigationssoftware nach Anspruch 10 und/oder eine digitale Karte nach Anspruch 8.

12. Mobiles Endgerät, insbesondere Mobiltelefon, aufweisend eine digitale Karte nach Anspruch 8 und/oder eingerichtet zur Durchführung eines Verfahrens nach einem der Ansprüche 5 bis 7.

## Claims

1. Computer-implemented method for the structuring and/or storing of data representing the form of at least one object (3), especially of a 2-dimensional object, which can be represented by a number of interpolation points (9),
a. wherein the interpolation points by which the object can be represented and/or is represented for the purposes of structuring and/or storage are structured and/or stored in a hierarchy having at least two levels
b. wherein a subset of the data is assigned to each level and/or a subset of the data is stored on each level
c. wherein the assignment to and/or storing of the data on the levels thereby occurs when
i. at least two anchor points (1, 2) are defined from the quantity of interpolation points (9) whose data are assigned to the highest level in the hierarchy and/or stored on the highest level in the hierarchy
ii. in the set of remaining interpolation points (9) or the subset in each case lying between two neighbouring interpolation points already assigned to and/or stored on the object, the interpolation point (4, 5, 6) at the greatest distance from a line (10) is selected in each case through the points assigned to levels and/or stored on levels, especially the interpolation points (4, 5) and anchor points (1,2) adjacent to the interpolation point, and the data of this selected interpolation point assigned to and/or stored on one level
iii. wherein the assignment to levels and/or storing on levels takes place in descending hierarchy of the levels
wherein the hierarchy has the anchor points in the uppermost level and the levels below that form a tree structure with nodes and leaves, wherein the interpolation points in step ii. are assigned to the nodes on the respective levels and/or stored in the nodes on the respective levels, **characterised in that** one interpolation point is assigned to each node and/or one interpolation point stored in each node and the assignment and/or storage to the nodes takes place such that the resulting sequence of interpolation points, in which these are assigned to the object, is given and/or is stored.

2. Method according to one of the previous claims, wherein the assignment and/or storage in step ii. takes place in such a way that all interpolation points are assigned to and/or stored on a level in each case, die interpolation points on the object between two already assigned and/or stored and with omission of the not yet assigned and/or stored neighbouring interpolation points at the greatest distance from a line through these already assigned and/or stored neighbouring interpolation points.

3. Method according to one of the previous claims, **characterised in that** the object (3) has a linear form and has a start point and an end point and the said start and end points are used as anchor points (1, 2).

4. Dataset for performing a method according to one of the claims 5 to 7 representing the form of at least one object (3), especially of a 2-dimensional object, which can be represented by a number of interpolation points (9),
a. wherein the data set has levels which stand hierarchically relative to each other, in which the interpolation points by which the object can be represented and/or is represented by structuring and/or storage, are stored as representational data
b. wherein a subset of the data is stored at each level,
c. wherein the assignment of the data to the levels is given by
i. in the uppermost level of the hierarchy, data of at least two anchor points (1, 2) selected from the interpolation points (9) of at least one object (3) are stored
ii. the data of the remaining interpolation points (9) are so distributed over the levels that the distance of each interpolation point considered of each level considered has a smaller distance from a line (10) through which, especially the interpolation points which lie higher in the level hierarchy, adjacent to the interpolation point considered; interpolation of the levels hierarchically above the level being considered has, as each, especially each between the neighbouring interpolation points of levels higher than the level of the interpolation point being considered, with the exception of the anchor points (1, 2), of levels lying hierarchically above the level being considered with reference to a line through all other points, especially all adjacent points, interpolation points and anchor points (1,2), stored on all levels that lie hierarchically above the level being considered, wherein the hierarchy in the topmost level has anchor points and the levels below that form a tree structure with nodes and leaves, wherein the interpolation points according to ii are assigned to the nodes in the particular levels, **characterised in that** an interpolation point is assigned to each node and is so arranged that a sequence of interpolation points is stored in which these are arranged on the object.

5. Method for scale factor variable and post-loading optimised display of a data set representing the form of at least one object (3) according to claim 4 or producing according to one of the claims 1 to 3 for the representation (11) of the at least one object (3), wherein, depending on the selected display scale factor (8) in addition to the anchor points (1, 2), only interpolation points (4, 5, 6) of a selection of levels and/or nodes beginning with the highest hierarchical level down to a one or more hierarchical stages lower display limit level and/or hierarchically down in one or more different branches by one or more stages lower display limit nodes are represented, wherein the level selected as display limit level and/or display limit nodes is/are selected depending on the display scale factor.

6. Method according to claim 5, wherein a hierarchically higher level and/or one or more hierarchically higher display limit nodes is/are selected as display limit level and/or display limit nodes when the scale factor is reduced below a certain value and as hierarchically lower level and/or one or more hierarchically higher display limit nodes is/are selected as display limit level or display limit nodes if the scale factor is increased beyond a certain size.

7. Method according to one of the above claims 5 to 6, wherein the display limit level and/or the display limit nodes is/are so selected that the lowest level is selected as display limit level and/or the lowest nodes are selected as the display limit nodes; it applies for these that all interpolation points of the selected level and/or of the selected nodes have a distance to a line through all interpolation points of all hierarchically higher ranked levels and anchor points (1,2), especially through the hierarchically higher nodes and/or levels of neighbouring interpolation points on the object, that has the same or, especially, greater resolution than that of the display.

8. Digital card having at least one data set according to claim 4 or stored and/or structured according to one of the claims 1 to 3.

9. Navigation device having a digital card according to claim 8 and/or configured to perform a method according to one of the claims 5 to 7.

10. Navigation software having a digital card according to claim 8 and/or configured to perform a method according to one of the claims 5 to 7.

11. Data medium having a navigation software according to claim 10 and/or a digital card according to claim 8.

12. Mobile terminal device, especially a mobile telephone, having a digital card according to claim 8 and/or configured to perform a method according to one of the claims 5 to 7.

## Revendications

1. Procédé mis en oeuvre par ordinateur pour la structuration et/ou le stockage de données représentant la forme d'au moins un objet (3), en particulier d'un objet bidimensionnel, représentable par une pluralité de points de référence (9),
a. où les données représentant les points de référence au moyen desquels l'objet est représentable et/ou représenté pour la structuration et/ou le stockage, sont structurées et/ou stockées dans une hiérarchie comportant au moins deux niveaux,
b. où à chaque niveau est associée une fraction des données et/ou une fraction des données est stockée dans chaque niveau,
c. où l'association aux niveaux et/ou le stockage des données dans ceux-ci sont effectués par
i. détermination dans la pluralité de points de référence (9) d'au moins deux points d'ancrage (1, 2) dont les données sont associées au niveau hiérarchiquement le plus élevé, et/ou sont stockées dans le niveau hiérarchiquement le plus élevé,
ii. sélection successive, parmi la pluralité de points de référence (9) restants ou la fraction
des points de référence situés entre deux points de référence contigus sur l'objet déjà associés et/ou déjà stockés,
du point de référence (4, 5, 6) présentant l'espacement maximal à une ligne (10) passant par les points de référence (4, 5) et les points d'ancrage (1, 2) déjà associés à des niveaux et/ou stockés dans ceux-ci, en particulier contigus au point de référence, et
association à un niveau et/ou stockage dans un niveau des données desdits points de références sélectionnés,
iii. l'association à des niveaux et/ou le stockage dans des niveaux étant effectués selon une hiérarchie descendante des niveaux,
la hiérarchie au niveau le plus élevé comportant les points d'ancrage et les niveaux inférieurs formant une arborescence avec des noeuds et des feuilles, les points de référence étant en étape ii. associés aux noeuds dans les niveaux respectifs et/ou stockés relativement aux noeuds dans les niveaux respectifs, **caractérisé en ce qu'**à chaque noeud est associé un point de référence et/ou un point de référence est stocké relativement à chaque noeud, et **en ce que** l'association aux noeuds et/ou le stockage relativement à ceux-ci sont effectués de manière à créer et/ou à stocker ainsi une séquence des points de référence, dans laquelle ceux-ci sont disposés sur l'objet.

2. Procédé selon la revendication 1, où l'association et/ou le stockage sont en étape ii. effectués de manière à associer à un niveau et/ou à stocker dans celui-ci tous les points de référence qui, parmi les points de référence situés sur l'objet entre deux points de référence contigus déjà associés et/ou déjà stockés, et en négligeant les points de référence pas encore associés et/ou pas encore stockés, présentent l'espacement maximal à une ligne passant par lesdits points de référence contigus associés et/ou stockés.

3. Procédé selon l'une des revendications précédentes, **caractérisé en ce que** l'objet (3) est linéaire et présente un point initial et un point terminal, et **en ce que** le point initial et le point terminal sont utilisés comme points d'ancrage (1, 2).

4. Enregistrement pour l'exécution d'un procédé selon l'une des revendications 5 à 7, représentant la forme d'au moins un objet (3), en particulier d'un objet bidimensionnel, représentable par une pluralité de points de référence (9),
a. où ledit enregistrement comprend des niveaux en relation hiérarchique entre eux, où sont stockés les données représentant les points de référence, au moyen desquels l'objet est représentable et/ou représenté pour la structuration et/ou le stockage, sont structurées et/ou stockées,
b. où une fraction des données est stockée dans chaque niveau,
c. où l'association des données aux niveaux est obtenue en ce que
i. sont stockés dans le niveau hiérarchiquement le plus élevé de données au moins deux points d'ancrage (1, 2) sélectionnées dans les points de référence (9) dudit au moins un objet (3),
ii. les données des points de référence (9) restants sont réparties dans les niveaux, de telle manière que
l'espacement de chaque point de référence considéré de chaque niveau considéré présente un espacement
à une ligne (10)
passant par les points de référence des niveaux hiérarchiquement supérieurs au niveau considéré,
contigus en particulier au point de référence considéré,
inférieur
à chaque
point de référence, situé en particulier entre les points de référence de niveau supérieur au niveau considéré, contigus au point de référence à considérer,
exception faite des points d'ancrage (1, 2),
des niveaux situés hiérarchiquement au-dessus du niveau considéré relativement à une ligne passant par tous les autres points de référence et points d'ancrage (1, 2),
en particulier contigus, mémorisés dans tous les niveaux hiérarchiquement supérieurs au niveau considéré,
la hiérarchie du niveau le plus élevé comprenant les points d'ancrage et les niveaux inférieurs formant une arborescence avec des noeuds et des feuilles, les points de référence étant en étape ii. associés aux noeuds dans les niveaux respectifs, **caractérisé en ce qu'**à chaque noeud est associé un point de référence, et **en ce que** l'association aux noeuds est effectuée de manière à stocker ainsi une séquence des points de référence, dans laquelle ceux-ci sont disposés sur l'objet.

5. Procédé d'affichage à échelle variable et à chargement optimisé d'un enregistrement représentant la forme d'au moins un objet (3) selon la revendication 4, ou généré selon l'une des revendications 1 à 3 pour la représentation (11) dudit au moins un objet (3),
où ne sont représentés, en fonction de l'échelle d'affichage (8) sélectionnée et en plus des points d'ancrage (1, 2), que des points de référence (4, 5, 6) d'une sélection de niveaux et/ou de noeuds, en descendant du niveau hiérarchiquement le plus élevé vers un niveau limite d'affichage hiérarchiquement inférieur d'un ou de plusieurs degrés et/ou en descendant jusqu'à un ou plusieurs noeuds limites d'affichage hiérarchiquement inférieurs d'un ou de plusieurs degrés dans différentes branches, le niveau sélectionné comme niveau limite d'affichage et/ou les noeuds limites d'affichage étant sélectionnés en fonction de l'échelle d'affichage.

6. Procédé selon la revendication 5, où un niveau hiérarchiquement supérieur et/ou un ou plusieurs noeuds limites d'affichage hiérarchiquement supérieurs sont sélectionnés comme niveau limite d'affichage et/ou comme noeuds limites d'affichage quand l'échelle est réduite au-delà d'un facteur défini, et où un niveau hiérarchiquement inférieur et/ou un ou plusieurs noeuds limites d'affichage hiérarchiquement inférieurs sont sélectionnés comme niveau limite d'affichage ou comme noeuds limites d'affichage quand l'échelle est agrandie au-delà d'un facteur défini.

7. Procédé selon l'une des revendications 5 ou 6, où le niveau limite d'affichage et/ou les noeuds limites d'affichage sont sélectionnés de manière à retenir le niveau le plus bas comme niveau limite d'affichage et/ou les noeuds les plus bas comme noeuds limites d'affichage, tous les points de référence du niveau et/ou des noeuds retenus présentant un espacement, égal ou en particulier supérieur à la résolution de l'affichage, à une ligne passant par tous les points de référence de tous les niveaux et points d'ancrage (1, 2) hiérarchiquement supérieurs, en particulier par les points de référence contigus sur l'objet de noeuds et/ou de niveaux hiérarchiquement supérieurs.

8. Carte numérique comportant au moins un enregistrement selon la revendication 4, ou stocké et/ou structuré selon l'une des revendications 1 à 3.

9. Appareil de navigation comportant une carte numérique selon la revendication 8 et/ou prévu pour l'exécution d'un procédé selon l'une des revendications 5 à 7.

10. Programme de navigation comportant une carte numérique selon la revendication 8 et/ou prévu pour l'exécution d'un procédé selon l'une des revendications 5 à 7.

11. Support de données comportant un programme de navigation selon la revendication 10 et/ou une carte numérique selon la revendication 8.

12. Terminal mobile, en particulier téléphone mobile, comportant une carte numérique selon la revendication 8 et/ou prévu pour l'exécution d'un procédé selon l'une des revendications 5 à 7.
